# EUROPEAN PATENT SPECIFICATION

(11) **EP 0 626 560 B1**
(45) Date of publication and mention of the grant of the patent: **23.12.1998**
(21) Application number: 94830248.4
(22) Date of filing: 24.05.1994
(51) Int. Cl.: G01B 11/10

(54) **A device for measuring a transversal section of a longitudinally-laid object translating in a longitudinal direction**
Vorrichtung zum Messen des Querschnitts eines in Längsrichtung angeordnetes Gegenstandes, der sich in Translationsbewegung in Längsrichtung befindet
Dispositif pour la mesure d'une section transversale d'un objet longitudinalement disposé en translation en une direction longitudinale

(30) Priority: 26.05.1993 IT BZ930025
(43) Date of publication of application: 30.11.1994
(73) Proprietor: MICROTEC S.r.l., 39042 Bressanone (Bolzano) (IT)
(72) Inventor: Danuser, Silvio, Ing., I-39042 Bressanone, Bolzano (IT)
(74) Representative: Lanzoni, Luciano

(56) References cited:
- EP-A- 0 266 525
- EP-A- 0 442 252
- DE-A- 2 555 975
- GB-A- 2 257 512

## Description

The invention relates to a device for measuring a transversal section of a longitudinally-laid object able to translate in a longitudinal direction. The device is applicable especially in sawmills, where automatic and speedy measurement of lumber size is necessary during their transport to the sawing stations so that they can be sorted into groups of similar size, or so that the saw machinary can be adapted to receive them.

Devices of this type act in a fixed plane of a generic transversal section, arranged perpendicular to the trunk advancement direction.

The measuring operation is continually repeated during the trunk movement so that a certain number of transversal measurements are obtained of a same trunk.

The measurement is taken by exploiting optical phenomena, where the trunk is invested sideways by light beams emitted by a light source and read by light sensor.

The prior art teaches various different devices for this purpose. A first of these comprises two equal units arranged perpendicular to each other. Each unit exhibits a group of light sources and sensors to read the luminous radiations emitted by the light sources. The body which section is to be measured is located between the light-sensor groups, and constitutes an obstacle for a part of the light beam emitted by the light sources, so that only a part of the light beams can be picked up and read by the sensors.

The real configuration of the section is approximated to a circle, which diameter is equal to a distance between the two most internal sensors that have sensed the light beam. By calculating a mean of the two circles obtained using the two groups, an approximate transversal section of the body is derived.

The principal drawback of such a device is that it requires a large number of sensors, in order that an ideal straight light conjoining a light source with its respective sensor can be as tangential as possible to the real silhouette of the section: thus the device tends to be costly.

A further drawback is the excessive maintenance needed, especially so as to keep the constituent elements clean, as they are constantly exposed and close to the dirty tree trunks.

A second device, like the above-described first device, provides a light source and an exactly opposite rank of light sensors, which the body to be measured is placed between.

Differently from the above case, a lens is situated between the sensors and the object. This lens collects the light rays emitted by the lamp which are not blocked by the body and sends them towards the sensor rank. When the geometrical conditions are known, as well as the position and the number of sensors which were able to read the light beam conveyed to them by the lens, the diameter of a circle can be calculated, which is approximately the diameter of the body (see e.g. DE-A-2 555 975).

The main disadvantage of this device is that the lens has continually to be focused, due to imprecision and slowness. The presence of the lens also causes a greater structural complexity in the device since focusing devices are necessary to focus it, and it has to be frequently cleaned.

A further drawback is that in order to explore the transversal section edge a second device, equal to the first, is necessary, located perpendicular to the first, so as to be able to strike the two semiperimeters of the transversal section to be measured. This in effect duplicates the problems inherent in to the use of the lens.

A third solution in the prior art envisages only one light source and one lens. Differently to the previous device, here the lens is arranged between the light source and the body, broadening the light beam emitted by the source and directed towards the body. A light sensor rank is arranged on the opposite side of the body to the lens, a part of which sensor rank (depending on the configuration of the body transversal section) reads the light beam. By analysing the geometrical conditions and the number and position of sensors, a circle can be calculated which approximates to the size of the body section.

The principal drawback of the device is that a large number of sensors is necessary, leading to prohibitive costs in the construction of the device.

Further disadvantages lie in the frequent need to maintain the lens, as well as the fact that the entity of the energy read by a single sensor is so small as to render necessary the use of a complex amplification system so that the electric signals can be processed.

Finally, there exists a further prior art device for measuring the transversal section of longitudinally-laid bodies translating longitudinally, which consists in two straight vertical supports, on each of which are arranged both a plurality of light sensors and a plurality of light-emitters. The sensors and the emitters are commanded so as to realise a lattice of light beams whose theoretical cross-over points are known. The transversal section is thus an obstacle in the sense that it prevents some light beams from reaching their cross-over points, and in this way the body transversal section can be calculated on the basis of the fact that it is known where the missing cross-over points should be.

The main drawback of the above device is that a distributed exploration of the whole section edge cannot be made, especially in two perpendicular directions, as the law concerning sawmills requires in some countries.

Another known device is shown in document EP 0 442 252 relating to a device for calculating the mass of a possibly moving object, in particular the diameter and the volume of a tree trunk.

The device is equipped with an optoelectronic measuring device, which comprises emitting diodes and receiving diodes arranged in a measuring plane which is perpendicular to the longitudinal axis of the object, as well as a processing unit and a photelectric relay which is situated in front of a measuring plane. The object to be measured is moved along the measuring plane between the emitting and receiving diodes.

The measuring plane is superiorly delimited by two supports, arranged at 90 degrees, of a measuring port. A line of emitting diodes is arranged internally of the two supports, at small constant distances on the lateral surfaces of emitting supports and turned towards the measuring plane.

Each of these lines of emitting diodes is associated to a receiving diode lying in the measring plane, at a fixed distance from the emitting support and centrally with respect thereto.

The emitting diodes of the emitting support are activated, starting from the top and moving downwards and one after another with brief time intervals, by the processing unit together with the associated receiving diode.

The main drawback of this type of device is constituted by the fact that the approximation of the edge of the tree trunk section is still not satisfactorily precise; that is, the resolution with which the edge of the tree trunk is explored is not optimal.

An essential aim of the present invention is to obviate the above drawbacks by providing a device for measuring transversal sections of a longitudinally-laid body moving in a longitudinal direction, which device can effect a large number of measurements, taking into consideration the real perimeter surface of the section and obtaining a more precise measurement value for the transversal section and, consequently, an improvement in the subsequent sawing operations.

A further aim of the present invention is to provide a device for measuring the transversal section of a longitudinally-laid body moving in a longitudinal direction, which is simple to maintain, economical thanks to the presence of few expensive elements, and which constituent elements are well protected from dirt.

These and other aims besides are all attained by the device for measuring a transversal section of a longitudinally-laid body moving in a longitudinal direction, object of the present invention, which principal characteristics are defined in the independent claim 1.

The capacities and effectiveness of the present device have been increased thanks to the presence of two second support elements each bearing a plurality of light sensors. Indeed, the increase in the number of sensors results in a greater number of points P, identified by means of optical phenomena, which points lead to the identification of a geometrical figure approximating the real peripheral edge of the section, so that with more points supplied to the processor the margin of difference between the real configuration and the deduced geometrical figure is much reduced.

Thus is reduced the length of those tracts of edge where it is impossible to deduce a point P, and therefore an extrapolation of the configuration thereof is necessary. This means that a better approximation can be obtained of the true configuration of the section to be measured.

Further characteristics and advantages of the present invention will better emerge from the detailed description that follows, of an embodiment of the invention, illustrated in the form of a non-limiting example in the accompanying drawings, in which:
figure 1 shows a diagrammatic scheme of a first embodiment of the invention;
figure 1a shows a further diagrammatic scheme of the embodiment of figure 1;
figure 2 shows a diagrammatic scheme of a second embodiment.

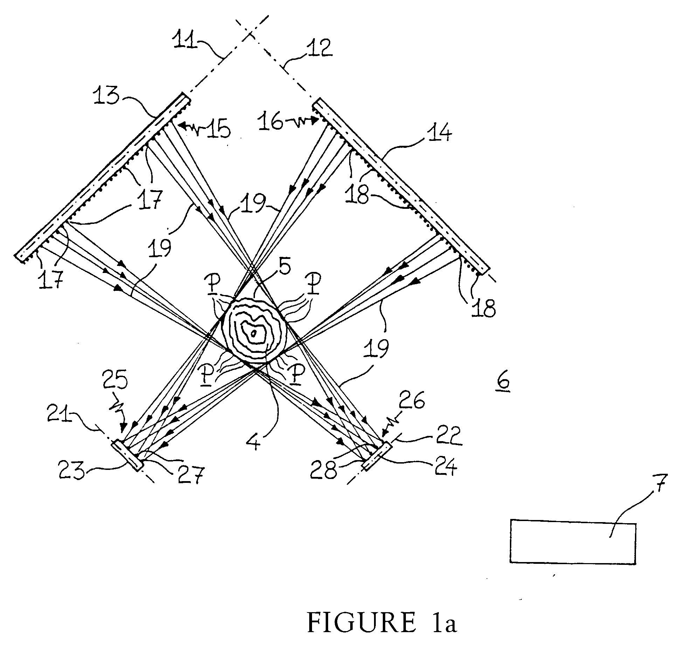

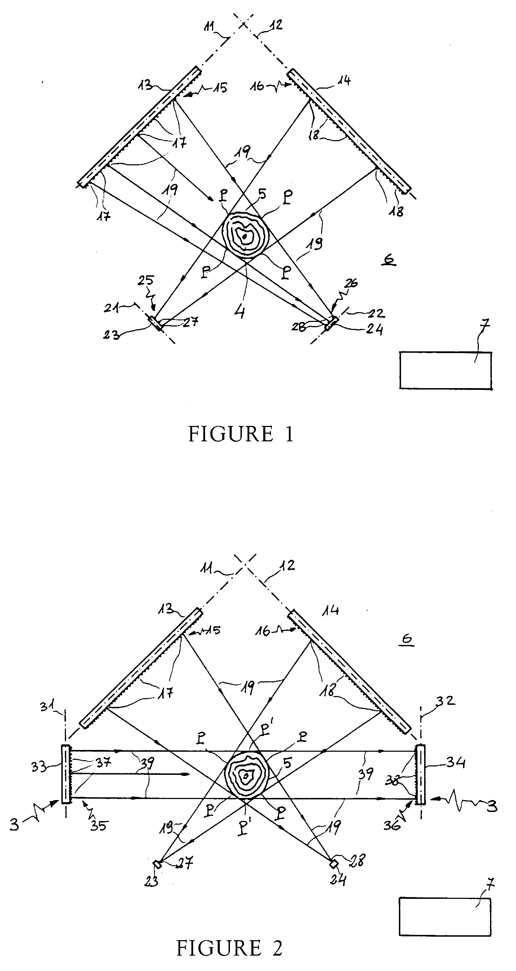

With reference to figure 1, the device is arranged in a fixed single plane 6 perpendicular to the advancement direction of a body 5. The measuring operation is effected repeatedly during the transit of the body 5, so that a number of sections are measured, the number depending on the speed of translation and the length of the body 5 as well as on the time the device requires in order to effect a measuring operation, which might be, for example, at a rate of three hundred a second. The device also satisfies the most severe regulations concerning the measurement of the tree trunks, as it can effect measurements along the longitudinal development of a trunk centimetre by centimetre even when the trunk is advancing fast, for example at three metres a second, as is common in sawmills.

During a measuring operation, the real configuration of a transversal section 4 is approximated by means of a flat geometrical figure. A number of points P on the edge of the transversal section are read by sensors, in the case of the invention by exploiting optic phenomena.

Two straight and rigid first support elements 13 and 14 are arranged on the measuring plane 6 of the transversal section 4 such that their longitudinal axes 11 and 12 intersect. On their sides facing the trunk, each of the elements 13 and 14 is provided with a plurality 15 and 16 of light sources 17 and 18, aligned along the longitudinal axes 11, 12 of the elements 13, 14.

The light sources 17, 18 each emit a light beam 19 in one direction along the measuring plane, perpendicular to the axes 11 and 12 of the elements 13, 14, and facing the object.

7 schematically denotes a command and processing unit commanding the light sources 17, 18 so that the body 5 is illuminated in proximity of the transversal section 4 to be measured by successive single light beams 19, emitted in said direction by each source 17, 18 according to a sequence corresponding to the alignment of the light sources 17, 18. In this way, there is a period in which the body 5 is not illuminated. Further, the body 5 is lit in two different directions, perpendicular to the axes 11 and 12 and constituted by the sources issuing from elements 13 and 14 lying on the measuring plane 6.

According to a preferred embodiment of the device, right angles are formed by the intersecting axes 11 and 12 of the two first elements 13, 14.

Consequently the directions which the sources 17 and 18 emit light in, being perpendicular to two directions which are perpendicular to each other, are also reciprocally perpendicular, such that the body 5 can be measured according to two directions which are reciprocally perpendicular, satisfying a legal requirement in some countries.

The number of light sources 17, 18 might be four hundred, according to a preferred embodiment of the invention.

Axes 21, 22, respectively parallel to axes 11 and 12, of two second support elements 23, 24, lie on the measuring plane 6 of the transversal section 4, on opposite sides to light sources 17 and 18.

Each of the second elements 23, 24, bears a plurality 25, 26 of light sensors 27, 28. The sensors 27, 28 are aligned along their respective axes 21, 22 and pick up the beam 19 emitted respectively by each light source 17, 18, depending on the real configuration of the transversal section 4 to be measured as well as the position of the sensors with respect to the light source 17, 18.

In a preferred embodiment of the invention there are three sensors 27, 28 disposed.

The resultant flat geometrical shape approximated by the command and processing unit 7 is a circle.

This is obtained by averaging the circles to which three points P of at least four points P on the edge of the transversal section correspond. The points P on the edge are identified as the points of contact on the edge of the transversal section 4 between a zone of shadow and a light zone, obtained by illuminating the body 5 with one light beam 19 emitted in said direction by a light source 17, 18, and by the fact that they belong to the straight line conjoining the light source 15, 16 to the sensor 27, 28 reading the light.

Figure 1a shows two second support elements 23, 24 each bearing a plurality 25, 26 of sensors 27, 28, the presence of which grants a greater power of resolution to the device of the invention. Indeed, the increase in the number of sensors results in a greater number of points P, identified by means of optical phenomena, which points lead to the identification of a geometrical figure approximating the real peripheral edge of the section 4, so that with more points supplied to the processor the margin of difference between the real configuration and the deduced geometrical figure is much reduced.

Thus is reduced the length of those tracts of edge where it is impossible to deduce a point P, and therefore an extrapolation of the configuration thereof is necessary. This means that a better approximation can be obtained of the true configuration of the section to be measured.

Figure 2 shows a second embodiment of the device according to the invention, wherein the reference numbers denoting parts common to both embodiments remain the same.

Differently to the first embodiment, in the second the support elements 23, 24 each bear one sensor only 27, 28. The sensor 27, 28 reads light beam 19, emitted by a light source 17, 18, depending on the real configuration of the transversal section 4 as well as on the position of the light beam 19 with respect to the light source 17, 18.

3 denotes an auxiliary measuring system, also acting on the measuring plane 6. It permits of determining further points P on the edge of the section 4 in addition to the points P already mentioned and obtained with the first embodiment.

Vertical longitudinal axes 31, 32 of two third rigid straight support elements 33, 34 lie on the plane 6 on opposite sides with respect to the body 5. One 33 of the elements 33, 34 bears a plurality 35 of light sources 37 aligned on a longitudinal side facing the body 5 and emitting emit a light beam 39 in a horizontal direction lying on the measuring plane 6. The other element 34 bears, on a longitudinal side facing the body 5, a corresponding plurality 36 of sensors 38 aligned along the longitudinal axis 32 of the element 34.

The sensors 36 pick up the beam 39 emitted by each light source 37 according to the real configuration of the transversal section 4 as well as to the position of the sensors 36 with respect to the light source 37.

Each sensor 38 is paired with a corresponding light source 37, due to the fact that both are arranged on a same horizontal direction lying on the measuring plane 6.

The command and processing unit 7 commands the light sources 37 to illuminate the body 5 in proximity of the transversal section 4, with successive single light beams 39, emitted in a horizontal direction by each light source 37 according to a sequence corresponding to an alignment of the light sources 37. In this way there exists a non-illuminated period between two illuminated periods and the illumination direction of the body 5 is a horizontal direction lying on the measuring plane 6.

The flat geometrical figure which the command and processing unit 7 approximates as the transversal section 4 is an ellipse, containing at least five points P P' on the edge of the section 4.

At least four points P are identified due the the fact of their being a point of contact on the edge of the section 4 between a zone of shadow and a light zone, obtained by illuminating the body 5 with only the light beam 19 emitted by one source 17, 18, and due to the fact that said zone belongs to the straight line conjoining the light source 17, 18 with the sensor 27, 28 reading the light.

The remaining point P' is identified due to its being the point of contact on the edge of the section 4 between a zone of shadow and a light zone, obtained by illuminating the body 5 with only one light beam 39 emitted in a horizontal direction by a light source 37, and as it belongs to the straight horizontal line conjoining the light source 37 with the sensor 38 picking up the light beam.

The invention thus attains its set aims.

Obviously the present invention may assume, in its practical realisation, forms and configuration which are different from those presented hereinabove, without foresaking the field of protection of the invention as defined in the claims.

Furthermore, all of the details can be substituted by elements which are technically equivalent and the shapes, dimensions and materials used may be of any kind according to needs.

## Claims

1. A device for measuring a transversal section (4) of a longitudinally-laid body (5) moving in a longitudinal direction, acting in a fixed measuring plane (6) of a transversal section (4) arranged perpendicular to an advancement direction of the body (5), repeated measurements taking place during an advancement of the body (5) and being calculated so as to derive an approximation of a real configuration of said transversal section (4) by producing a flat geometrical figure; said figure being calculated from a number of points (P) on a peripheral edge of the body (5) identified by striking the transversal section (4) with light beams (19) emitted by a light source (17, 18) and picked up by a sensor (27, 28),
wherein
longitudinal axes (11, 12) of two first rigid and straight support elements (13, 14) lie and intersect on the measuring plane (6), each of which support elements (13, 14) bears on a longitudinal side facing said body (5) a plurality of light sources (17, 18) aligned along the longitudinal axes (11, 12) of the support elements (13, 14) and each light source (17, 18) emitting a light beam (19) in a direction lying on the measuring plane (6) and perpendicular to said axes (11, 12) of the support elements (13, 14),
and wherein through a totality of components which are partly mechanical, partly electrical and partly electronic, all of which being physically united and functionally interdependent and materially united in a command and processing unit (7), the light sources (17, 18) are commanded to illuminate the body (5) in proximity of the transversal section (4) to be measured with successive single light beams (19) emitted in said direction by each light source (17, 18) according to a sequence corresponding to an order of alignment of the light sources (17, 18), there being a non-illuminated period between two consecutive illuminations of the body (5) having two different and reciprocal illumination directions perpendicular to the axes (11, 12) of the support elements (13, 14) and lying on the measuring plane,
and wherein
axes (21, 22) of two second support elements (23, 24) lie on the measuring plane (6) of the transversal section (4) and are parallel to the axes (11, 12) of the first support elements (13, 14), said second elements (23, 24) being opposite each to one of the two first support elements (13, 14), characterised in that each of said second support elements (23, 24) bears a plurality of light sensors (27, 28), each of said plurality of sensors (27, 28) being aligned along one of the axes (21, 22) and picking up said light beam (19) emitted from each of said light sources (17, 18), according to a real configuration of the transversal section (4) to be measured as well as to the position of the plurality of sensors (27, 28) with respect to the light sources (17, 18),
such that with each sensor (27,28) two points (P) on the periphery of the body (5) are determined, and in that a processor (7) is provided arranged to approximate the real peripheral edge of the transversal section (4) of said body (5) based on those determined points (P).

2. A device as in claim 1, characterised in that angles formed by the intersecting axes (11, 12) of said two first support elements (13, 14) are right angles.

3. A device as in claim 2, characterised in that the plurality of light sources (17, 18) amounts to four hundred in number.

4. A device as in claim 2, characterised in that the flat geometric figure representing the transversal section (4) and constituting an approximation performed by the command and processing unit (7) is a circle, obtained by averaging the circles calculated from a plurality of circles deriving from three points (P) of at least four points (P) on the peripheral edge of the body (5), each point (P) being identified by being a point of contact on said peripheral edge of a light beam (19) situated between a zone of shadow and and light zone, obtained by illuminating said body (5) with one only light beam (19) emitted from a light source (17, 18) and each point (P) belongs to a straight line conjoining said light source (15, 16) with said sensor (27, 28) picking up the light beam (19).

5. A device as in claim 2, characterised in that it further comprises an auxiliary measuring system (3) acting on the measuring plane and lying on the transversal section (4) of the measuring plane (6) and on opposite sides of the body (5),
said auxiliary measuring system (3) including vertical longitudinal axes (31, 32) of two third rigid and straight support elements (33, 34), one of which third support
elements (33, 34) bears on a side facing the body (5) a plurality of light sources (37) aligned along the axis of the element (33) and emitting a light beam (39) in a horizontal direction lying on the measuring plane (6), the other of which third support elements (33, 34) bears on a longitudinal side facing the body (5) a corresponding plurality (36) of light sensors (38), said light sensors (38) of said auxiliary measuring system (3) being aligned along said longitudinal axis (32) of said element (34) and picking up said light beam (39) emitted by each light source (37) of said auxiliary measuring system (3) according to a real configuration of the transversal section (4) as well as of the position of the sensors (38) of said auxiliary measuring system (3) in relation to the light source (37) of said auxiliary measuring system (3), each sensor (38) of said auxiliary measuring system (3) also being paired with a corresponding light source (37) of said auxiliary measuring system (3) by being arranged on a same horizontal direction lying on said measuring plane (6),
and in that
the command and processing unit commands said light sources (37) of said auxiliary measuring system (3) to illuminate the body (5) in proximity of the transversal section (4), with successive single light beams (39), emitted in a horizontal direction by each light source (37) of said auxiliary measuring system (3), so that between two consecutive illuminations of the body (5) there is a non-illuminated period; an illumination direction of the body (5) being a horizontal direction lying on the measuring plane (6).

6. A device as in claim 5 characterised in that the flat geometrical figure approximating a real shape of a transversal section of the body (5) and obtained by the command and processing unit (7) is an ellipse, to which ellipse at least five points (P, P') situated on the peripherhal edge of the body (5) belong, at least four of which points (P, P') being points of contact on the edge of the transversal section (4) between a zone of shadow and a light zone obtained by illuminating the body (5) with one beam (19) emitted by a light source (17, 18) mounted on said first support elements (13, 14) and belonging to a straight line conjoining the light source (17, 18) with the sensor (27, 28) mounted on said second support elements (23, 24) picking up the light, and the remaining point (P') being a point of contact on the peripheral edge of the transversal section (4) between a zone of shadow and a light zone, obtained by illuminating the body (5) with a single light beam (39) emitted in a horizontal direction by the light source (37) of said auxiliary measuring system (3) and belonging to a same straight line conjoining the light source (37) with the sensor (38) of said auxiliary measuring system (3) picking up the light.

## Patentansprüche

1. Vorrichtung zum Messen des Querschnitts (4) eines in Längsrichtung angeordneten Gegenstandes (5), der sich in Translationsbewegung in Längsrichtung befindet, mit Wirkung in einer festliegenden, im wesentlichen zur Bewegungsrichtung des Gegenstandes (5) senkrecht angeordneten Meßebene (6) eines unbestimmten Querschnittes (4), wobei die Messung wiederholt während der Bewegung des Gegenstandes (5) und über die Annäherung der realen Konfiguration des Querschnittes (4) mit einer ebenen, geometrischen Figur erfolgt, wobei diese Figur wie jene berechnet wird, der eine Anzahl von Punkten (P) auf der Kontur des Querschnittes (4) angehört, und wobei jeder dieser Punkte (P) festgelegt wird, indem der Querschnitt (4) durch Lichtbündel (19) abgetastet wird, die von einer Lichtquelle (17, 18) ausgestrahlt und durch einen Lichtsensor (27,28) aufgenommen werden,
und wobei Längsachsen (11, 12) von zwei ersten, starren und geradlinigen Tragelementen (13, 14) auf der genannten Meßebene (6) liegen und sich schneiden, wobei jedes der Tragelemente (13, 14) auf einer in Richtung des Gegenstandes (5) gewandten Längsseite eine Vielzahl von Lichtquellen (17, 18) trägt, die jeweils längs der Längsachsen (11, 12) der Tragelemente (13, 14) ausgerichtet sind, und wobei jede Lichtquelle (17, 18) eine Lichtstrahlung (19) aussendet, die auf der Meßebene (6) und senkrecht zu den genannten Achsen der Tragelemente (13, 14) liegt,
und wobei über einen Komplex von teilweise mechanischen, teilweise elektrischen und teilweise elektronischen, unter dem physikalischen Gesichtspunkt miteinander vereinten und unter dem Gesichtspunkt ihrer Funktion insgesamt zur Bildung einer Steuer- und Verarbeitungseinheit miteinander zusammenhängenden Bestandteilen diese Lichtquellen (17, 18) gesteuert werden, damit der Gegenstand (5) in der Nähe des zu messenden Querschnittes (4) durch einander folgende, einzelne Lichtbündel (19) beleuchtet wird, die in der genannten Richtung durch jede Lichtquelle (17, 18) gemäß einer Reihenfolge jeweils ausgestrahlt werden, die der Ausrichtung der Lichtquellen (17, 18) entspricht, wobei dadurch zwischen zwei nacheinander folgenden Beleuchtungen des Gegenstandes (5) ein Zeitabschnitt einer Nicht- Beleuchtung desselben vorliegt und wobei überdies zwei verschiedene Beleuchtungsrichtungen des Gegenstandes (5) vorliegen, die zu den Achsen (11, 12) der Tragelemente (13, 14) senkrecht sind und auf der Meßebene 1(6) liegen, und wobei auf der Meßebene (6) des Querschnittes (4) jeweils zu den Achsen (11, 12) parallele Achsen (21, 22) von zweiten Tragelementen (23, 24) liegen, wobei die zweiten Tragelemente (23, 24) auf einer zu den ersten Tragelementen (13, 14) abgewandten Seite liegen,
**dadurch gekennzeichnet**, daß jedes der zweiten Tragelemente (23, 24) eine Vielzahl (25, 26) von Lichtsensoren (27, 28) trägt, wobei diese Lichtsensoren (27, 28) jeweils längs der genannten Achsen (21, 22) ausgerichtet und fähig sind, das jeweils von jeder Lichtquelle (17, 18) ausgestrahlte Lichtbündel in Abhängigkeit der realen Konfiguration des zu messenden Querschnittes (4) sowie der Position der Lichtsensoren (27, 28) gegenüber der Lichtquelle (17, 18) derart aufzunehmen, daß durch jeden Lichtsensor (27, 28) zwei Punkte (P) auf der Kontur des Gegenstandes (5) festgelegt werden und daß die Einheit (7) die reale Konfiguration der Kontur des Querschnittes (4) des Gegenstandes (5) auf Grund dieser festgelegten Punkte annähert.

2. Vorrichtung nach Anspruch 1, dadurch gekennzeichnet, daß die durch die genannten, sich schneidenden Achsen (11, 12) der beiden ersten Tragelemente (13, 14) gebildeten Winkel rechte Winkel sind.

3. Vorrichtung nach Anspruch 2, dadurch gekennzeichnet, daß die Vielzahl von Lichtquellen (17, 18) gleich vierhundert ist.

4. Vorrichtung nach Anspruch 2, dadurch gekennzeichnet, daß die geometrische, den Querschnitt darstellende und die durch die Steuer- und Verarbeitungseinheit (7) des Querschnittes erzeugte Annäherung bildende, ebene Figur ein Kreis ist, der durch Suchen des Mittelwertes zwischen den Kreisen erhalten wird, dem drei Punkte (P) von mindestens vier Punkten (P) auf der Kontur des genannten Querschnittes (4) angehören, wobei jeder Punkt (P) dadurch festgelegt wird, daß er der Berührungspunkt auf der Kontur zwischen einem Schattenbereich und einem Lichtbereich ist, die erhalten werden, indem der Gegenstand (5) mit nur dem einzigen Lichtbündel (19) beleuchtet wird, das von einer Lichtquelle ausgestrahlt wird, und dadurch, daß er der Geraden angehört, die die das Licht ausstrahlende Lichtquelle mit dem das Licht aufnehmenden Lichtsensor (27, 28) verbindet.

5. Vorrichtung nach Anspruch 2, dadurch gekennzeichnet, daß sie überdies ein Hilfsmeßsystem (3) umfaßt, das in der genannten Meßebene des Querschnittes (4) wirkt und auf dem Querschnitt (4) der Meßebene (6) und an entgegengesetzten Seiten des Gegenstandes (5) liegt, wobei dieses Hilfsmeßsystem (3) senkrechte Längsachsen (31, 32) von zwei dritten, starren und geradlinigen Tragelementen (33, 34) beinhaltet, wobei eines (33) der genannten Tragelemente (33, 34) auf einer gegen den Gegenstand (5) gewandten Seite eine Vielzahl von Lichtquellen (37) trägt, die längs der Achse des Tragelementes (33) ausgerichtet und fähig sind, eine Lichtstrahlung (39) in einer horizontalen Richtung auszusenden, die auf der Meßebene (6) liegt, und wobei das andere (34) der genannten Tragelemente (33, 34) auf einer gegen den Gegenstand (5) gerichteten Längsseite eine entsprechende Vielzahl (36) von Lichtsensoren (38) trägt, wobei diese Lichtsensoren (38) des Hilfsmeßsystems (3) längs der Längsachse (32) des genannten Tragelementes (34) ausgerichtet und fähig sind. das Lichtbündel (39) aufzunehmen, das von jeder Lichtquelle (37) des Hilfsmeßsystems (3) in Abhängigkeit der realen Konfiguration des Querschnittes (4) sowie der Position der Lichtsensoren (38) des Hilfsmeßsystems gegenüber der Licht ausstrahlenden Lichtquelle (37) des Hilfsmeßsystems (3) ausgestrahlt wird, und wobei überdies jeder Lichtsensor (38) des Hilfsmeßsystems (3) mit einer entsprechenden Lichtquelle (37) des Hilfsmeßsystems (3) dadurch gekoppelt ist, daß beide in derselben horizontalen. auf der Meßebene (6) liegenden Richtung angeordnet sind,
und dadurch, daß die Steuer- und Verarbeitungseinheit die Lichtquellen (37) des Hilfsmeßsystems (3) steuert, damit dieser Gegenstand (5) in der Nähe des Querschnittes (4) durch nacheinander folgende, einzelne, jeweils in horizontaler Richtung von jeder Lichtquelle (37) des Hilfsmeßsystems ausgestrahlte Lichtbündel (39) derart beleuchtet wird, daß zwischen zwei nacheinander folgenden Beleuchtungen des Gegenstandes (5) ein Zeitabschnitt einer Nicht-Beleuchtung vorliegt, und wobei überdies als Beleuchtungsrichtung des Gegenstandes (5) die horizontale, auf der Meßebene (6) liegende Richtung vorliegt.

6. Vorrichtung nach Anspruch 5, dadurch gekennzeichnet, daß die geometrische, annähernd die reale Kontur des Querschnittes darstellende und durch die Steuer- und Verarbeitungseinheit (7) erhaltene, ebene Figur eine Ellipse ist, der fünf auf der Kontur des Gegenstandes (5) liegende Punkte (P, P') angehören, wobei mindestens vier Punkte (P, P') derselben dadurch festgelegt werden, daß sie Berührungspunkte auf der Kontur des Querschnittes (4) zwischen einem Schattenbereich und einem Lichtbereich sind, die erhalten werden, indem der Gegenstand (5) mit nur dem einzigen Lichtbündel (19) beleuchtet wird, das von einer Lichtquelle ausgestrahlt wird, die auf den ersten Tragelementen angeordnet ist, und dadurch, daß er der Geraden angehört, die die das Licht ausstrahlende Lichtquelle mit dem das Licht aufnehmenden und auf den zweiten Tragelementen angeordneten Lichtsensor (27, 28) verbindet, und wobei der bleibende Punkt (P') dadurch festgelegt wird, daß er der Berührungspunkt auf der Kontur des Querschnittes (4) zwischen einem Schattenbereich und einem Lichtbereich ist, die erhalten werden, indem der Gegenstand (5) durch nur das einzige Lichtbündel (39) beleuchtet wird, das in horizontaler Richtung von der Lichtquelle (37) des Hilfsmeßsystems (3) ausgestrahlt wird, und dadurch, daß er der horizontalen Geraden angehört, die die das Licht ausstrahlende Lichtquelle mit dem das Licht aufnehmenden Lichtsensor (38) des Hilfsmeßsystems (3) verbindet.

## Revendications

1. Dispositif pour la mesure de la section transversale (4) d'un objet (5) longitudinalement disposé et doté d'un mouvement longitudinal de translation, agissant dans un plan fixe (6) de mesure d'une section transversale (4) générique substantiellement disposée perpendiculairement à la direction de mouvement dudit objet (5), la mesure se produisant plusieurs fois pendant le mouvement dudit objet (5) et au moyen de l'approximation de la configuration réelle de ladite section transversale (4) avec une figure géométrique plane, ladite figure étant calculée comme étant celle à laquelle appartient un nombre de points (P) sur le contour de ladite section transversale (4) et chacun desdits points étant individualisé en appliquant sur ladite section transversale (4) des faisceaux de lumière (19) émis par une source de lumière (17, 18) et captés par un capteur de lumière (27, 28),
et des axes longitudinaux (11, 12) de deux premiers éléments (13, 14) de support rigides et rectilignes reposant et se croisant sur ledit plan (6) de mesure, chacun desdits éléments (13,14) portant, sur un côté longitudinal tourné vers ledit objet (5), une pluralité de sources de lumière (17, 18), respectivement alignées le long des axes longitudinaux (11, 12) des éléments de support (13,14) et chacune des sources de lumière (17, 18) émettant une radiation lumineuse (19) dans une direction comprise dans le plan (6) de mesure et perpendiculaire auxdits axes (11, 12) des éléments de support (13, 14),
et au moyen d'un ensemble de composants en partie mécaniques, en partie électriques et électroniques, unis réciproquement du point de vue physique et interdépendants du point de vue de leur fonction en formant dans son ensemble une unité (7) de commande et d'élaboration, lesdites sources (17, 18) de lumière étant commandées afin que ledit objet (5) soit illuminé, à proximité de ladite section transversale (4) à mesurer, avec des faisceaux (19) de lumière distincts successifs, respectivement émis dans ladite direction par chacune des sources (17, 18) de lumière selon une séquence qui correspond à l'alignement desdites sources (17, 18) de lumière, étant de cette manière présente entre deux illuminations consécutives dudit objet (5) une période de non illumination de celui-ci, en ayant en outre deux directions d'illumination de l'objet (5) différentes perpendiculaires aux axes (11, 12) des éléments de support (13, 14) et comprises dans ledit plan (6) de mesure,
et sur le plan (6) de mesure de la section transversale (4) étant compris des axes (21, 22), respectivement parallèles auxdits axes (11, 12), de deux seconds éléments (23, 24) de support, lesdits seconds éléments (23, 24) étant situés de la partie opposée par rapport aux premiers éléments de support (13, 14), **caractérisé par le fait** que chacun desdits seconds éléments de support (23, 24) porte une pluralité (25, 26) de capteurs (27, 28) de lumière, lesdits capteurs (27, 28) de lumière étant alignés respectivement le long des axes (21, 22) et aptes à capter ledit faisceau (19) de lumière, émis respectivement par chacune des sources (17, 18) de lumière, dépendant de la configuration réelle de ladite section transversale (4) à mesurer ainsi que de la position des capteurs (27, 28) par rapport à la source (17, 18) émettant la lumière, de manière à ce qu'avec chacun des capteurs (27, 28) soient déterminés deux points (P) sur le contour de l'objet (5) et que l'unité (7) fasse une approximation de la configuration réelle du contour de la section transversale (4) de l'objet (5) sur la base de tels points (P) déterminés.

2. Dispositif selon la revendication 1, caractérisé par le fait que les angles formés par lesdits axes (11, 12) desdits deux premiers éléments (13, 14) de support sont à angles droits.

3. Dispositif selon la revendication 2, caractérisé par le fait que ladite pluralité de sources (17, 18) de lumière est égale à quatre cent unités.

4. Dispositif selon la revendication 2, caractérisé par le fait que la figure géométrique plane représentant la section transversale et constituant l'approximation produite par l'unité (7) de commande et d'élaboration de la section transversale (4) est un cercle, obtenu en faisant la moyenne des cercles auxquels appartiennent trois points (P) d'au moins quatre points (P) sur le contour de ladite section transversale (4), chaque point (P) étant individualisé par le fait qu'il est le point de contact sur le contour entre une zone d'ombre et une zone de lumière, obtenues en illuminant ledit objet (5) avec le seul unique faisceau (19) de lumière émis par une source (17, 18) de lumière, et par le fait qu'il appartient à la ligne droite joignant ladite source (15, 16) de lumière émettant la lumière avec ledit capteur (27, 28) de lumière captant la lumière.

5. Dispositif selon la revendication 2, caractérisé par le fait qu'il comprend en outre un système auxiliaire (3) de mesure agissant dans ledit plan de mesure de ladite section transversale (4) et placé sur la section transversale (4) du plan de mesure (6) et en des parties opposées de l'objet (5), ledit système auxiliaire (3) de mesure incluamt des axes (31, 32) longitudinaux verticaux de deux troisièmes éléments (33, 34) de support rigides et rectilignes, l'un (33) desdits éléments (33, 34) portant, sur un côté tourné vers l'objet (5), une pluralité de sources (37) de lumière, alignées le long de l'axe de l'élément (33) et aptes à émettre une radiation lumineuse (39) dans une direction horizontale comprise dans ledit plan (6) de mesure, et l'autre (34) desdits éléments (33, 34) portant, sur un côté longitudinal tourné vers l'objet (5), une pluralité (36) correspondante de capteurs (38) de lumière, lesdits capteurs (38) de lumière dudit système auxiliaire (3) de mesure étant alignés le long dudit axe (32) longitudinal dudit élément (34) et aptes à capter ledit faisceau (39) de lumière émis par chaque source (37) de lumière dudit système auxiliaire (3) de mesure, dépendant de la configuration réelle de la section transversale (4) ainsi que de la position des capteurs (38) dudit système auxiliaire (3) de mesure par rapport à ladite source (37) émettant la lumière dudit système auxiliaire (3) de mesure, chaque capteur (38) de lumière dudit système auxiliaire (3) de mesure étant en outre accouplé à une source (37) de lumière correspondante dudit système auxiliaire (3) de mesure par le fait qu'ils sont tous les deux disposés sur la même direction horizontale comprise dans le plan (6) de mesure,
et par le fait que l'unité de commande et d'élaboration commande lesdites sources (37) de lumière dudit système auxiliaire (3) de mesure, afin que ledit objet (5) soit illuminé, à proximité de la section transversale (4), avec des faisceaux uniques successifs (39) de lumière, respectivement émis en direction horizontale par chacune des sources (37) de lumière dudit système auxiliaire (3) de mesure, de manière à ce qu'entre deux illuminations consécutives dudit objet (5) soit présente une période de non illumination, et ayant en outre pour direction d'illumination dudit objet (5) la direction horizontale comprise dans ledit plan (6) de mesure.

6. Dispositif selon la revendication 5, caractérisé par le fait que ladite figure géométrique plane donnant une approximation du contour réel de la section transversale de l'objet (5) et obtenue par l'unité de commande et d'élaboration (7) est une ellipse, à laquelle appartiennent au moins cinq points (P, P') situés sur le contour dudit objet (5), au moins quattre points (P, P') desquels sont individualisés par le fait qu'ils sont des points de contact sur le contour de ladite section transversale (4) entre une zone d'ombre et une zone de lumière, obtenues en illuminant l'objet (5) avec le seul unique faisceau (19) de lumière émis par une source (17, 18) de lumière disposée sur lesdits premiers éléments de support (13, 14), et par le fait qu'ils appartiennent à la ligne droite joignant la source (17, 18) de lumière émettant la lumière et le capteur (27, 28) de lumière captant la lumière et disposé sur lesdits seconds éléments de support (23, 24), et le point restant (P') étant individualisé par le fait qu'il est un point de contact sur le contour de la section transversale (4) entre une zone d'ombre et une zone de lumière, obtenues en illuminant l'objet (5) avec le seul unique faisceau (39) de lumière émis en direction horizontale de ladite source (37) de lumière dudit système auxiliaire (3) de mesure et par le fait qu'il appartient à la ligne droite horizontale joignant la source (37) de lumière émettant la lumière et le capteur (38) de lumière captant la lumière dudit système auxiliaire (3) de mesure.
